Europäisches Patentamt

European Patent Office

Office européen des brevets

(19)

(11)  EP 0 835 016 B1

(12)  **FASCICULE DE BREVET EUROPEEN**

(45) Date de publication et mention
de la délivrance du brevet:
**17.03.2004   Bulletin 2004/12**

(51) Int Cl.⁷: **H04M 3/50**

(21) Numéro de dépôt: **97402360.8**

(22) Date de dépôt: **07.10.1997**

(54) **Agencement de distribution d'appels**

Anrufverteilungsvorrichtung

Call distribution arrangement

(84) Etats contractants désignés:
**AT BE CH DE DK ES FI GB GR IE IT LI LU MC NL
PT SE**

(30) Priorité: **07.10.1996  FR 9612184**

(43) Date de publication de la demande:
**08.04.1998   Bulletin 1998/15**

(73) Titulaire: **ALCATEL
75008 Paris (FR)**

(72) Inventeurs:
• **De Kouchkovsky, Nicolas
92000 Nanterre (FR)**
• **Derville, Denis
75015 Paris (FR)**
• **Bizien, Jean-Yves
29200 Brest (FR)**
• **Baruch, Sauveur
29200 Brest (FR)**

(74) Mandataire: **Sciaux, Edmond et al
Compagnie Financière Alcatel
Département de Propriété Industrielle,
5, rue Noel Pons
92734 Nanterre Cedex (FR)**

(56) Documents cités:
**EP-A- 0 342 667          GB-A- 2 265 066
US-A- 5 206 903**

• **W. HUYBRECHTS: "OPERATIONAL ASPECTS
OF THE SYSTEM 12 OPERATOR SUBSYSTEM"
PROCEEDINGS OF THE INTERNATIONAL
SWITCHING SYMPOSIUM-PART 1- SESSION
22C PAPER 4, 7 - 11 mai 1984, FLORENCE(IT),
pages 1-7, XP002035637**
• **BERGER J P ET AL: "SYSOPE: SYSTEME
NUMERIQUE AUTONOME D'OPERATRICES"
COMMUTATION ET TRANSMISSION, vol. 10, no.
3, 1988, pages 5-18, XP000024774**

**Description**

L'invention concerne un agencement destiné à assurer une distribution d'appels téléphoniques dans le cadre d'un réseau comportant le plus souvent un ou plusieurs commutateurs téléphoniques, alors interconnectés, auxquels sont reliés des postes ou terminaux téléphoniques dont au moins certains sont destinés à satisfaire des demandes de service et/ou d'information parvenant de correspondants sous forme d'appels téléphoniques, ces appels étant établis via des joncteurs par l'intermédiaire desquels les postes ou terminaux des correspondants, c'est-à-dire des utilisateurs demandeurs, entrent en communication avec l'agencement.

A l'origine, les agencements de distribution d'appels ont généralement été réalisés sous la forme d'équipements spécialisés prévus pour être associés à des commutateurs téléphoniques en vue de permettre une mise en communication de correspondants par voie téléphonique avec des opérateurs chargés de répondre à leurs demandes. Depuis, il est devenu habituel d'intégrer ces agencements, comportant le plus souvent une importante partie logicielle, dans les commutateurs téléphoniques et en particulier dans ceux, dits de type privé, mis à disposition des utilisateurs, par exemple au niveau des entreprises dont ces utilisateurs sont souvent les employés ou les clients. Ces agencements permettent en effet à de nombreuses entreprises de fournir des informations et des services à la demande, sous des formes individualisées et éventuellement personnalisées très élaborées; de ce fait, ils participent à l'image que présentent au monde extérieur les entreprises qui les mettent en oeuvre.

Bien entendu, ces agencements de distribution d'appels ont pour première fonction d'aiguiller les appels téléphoniques des correspondants vers un opérateur, homme ou machine, ayant au moins partiellement la charge de les prendre en compte et/ou d'y répondre.

Différents critères sont susceptibles d'intervenir au cours de la ou des opérations destinées à conduire à la distribution d'un appel vers un opérateur par un agencement et il est courant que soient pris en compte le correspondant concerné, l'objet de l'appel et/ou le temps d'attente déjà supporté par le correspondant pour cet appel. Ces critères sont exploités par l'agencement de distribution et/ou par le personnel exploitant chargé d'exploiter et/ou superviser cet agencement de manière que la réponse la plus appropriée possible soit apportée à chaque appel en fonction des besoins des demandeurs et notamment de ceux ayant alors un appel en cours et des possibilités et disponibilités en matière de traitement alors exploitables en matière d'homme et de machine.

Bien entendu la rapidité de réponse est un élément essentiel dont un tel agencement doit tenir en compte dans la mesure où cette rapidité de réponse est un des éléments les plus directs d'appréciation du service rendu par l'agencement et par les services qu'il dessert, cet élément conditionnant largement l'impression de satisfaction ou d'insatisfaction ressentie par les utilisateurs.

Ceci a conduit à des agencements de distribution organisés de manière à avoir des files d'attente différentes qui permettent de distribuer les correspondants en fonction des disponibilités des opérateurs et d'attribuer des priorités à ces correspondants en fonction de l'ancienneté de leurs appels respectifs et/ou de critères liés à eux-mêmes, lorsque ces correspondants sont susceptibles d'être identifiés sélectivement d'une manière ou d'une autre lorsqu'ils appellent. De tels agencements sont connus des documents GB-A-2 265 066 et EP-A-0 342 667. Toutefois ces agencements ont nécessairement des limites et ils ne sont pas toujours suffisamment performants, notamment en période de fort trafic d'appels, et les attentes peuvent alors se prolonger pour certains correspondants malchanceux. Comme dans tout trafic insuffisamment contrôlé, il peut y avoir des surcharges localisées qui pénalisent certains correspondants en attente de réponse dans une file temporairement bloquée alors qu'il peut y avoir dans le même temps d'autres files d'attente déchargées qui permettraient de les desservir.

Ceci a aussi conduit à des agencements où les différents traitements susceptibles d'être réalisés à l'occasion des appels sont morcelés en des suites d'opérations qui sont organisées de manière modulaire et qui permettent d'ouvrir des possibilités de redistribution à différents stades des traitements.

Toutefois, les différents agencements évoqués ci-dessus, ne sont pas réellement satisfaisants dans la mesure où ils ne fournissent pas une information suffisante notamment en cas de surcharge menaçante ou avérée, ce qui empêche l'exploitant d'avoir une vision globale suffisamment à l'avance et ce qui conduit à une insatisfaction des correspondants lorsqu'ils sont mal servis et parfois laissés sans information pertinente, lorsque le traitement d'un appel est anormalement retardé. Or, comme déjà indiqué, les conditions d'exploitation de tels agencements participent largement à l'image des entreprises qui les exploitent et des services à la mise en oeuvre desquels ils participent vis-à-vis de ceux qui sont amenés à les utiliser. L'invention propose donc un agencement de distribution d'appels téléphoniques, destiné à permettre l'accès des correspondants de postes et/ou terminaux d'un réseau de télécommunications à au moins un service assuré par l'intermédiaire d'au moins un opérateur, ledit agencement comportant au moins un pilote transmettant les appels téléphoniques d'accès à un service, au moins un groupe d'opérateurs de traitement, et au moins une unité de transit pour les appels reçus via un pilote et en attente de traitement par un opérateur.

Selon une caractéristique de l'invention, l'agencement comporte:

- des premiers moyens, dits de distribution primaire, assurant le choix d'une unité de transit pour un appel parvenu par un pilote en fonction d'un coût minimum obtenu par comparaison des coûts établis à partir d'indications caractéristiques de la situation présente de chacune des unités de transit et de chacun des groupes de traitement alors prévus pour pouvoir être mis en communication avec ce pilote;

- des seconds moyens, dits de distribution secondaire aval, assurant le choix d'un groupe de traitement, pour un appel parvenu à une unité de transit préalablement vide d'appel; en fonction d'un coût minimum obtenu par comparaison des coûts établis à partir d'indications caractéristiques de la situation présente de chacun des groupes de traitement alors prévus pour pouvoir être mis en communication avec cette unité de transit;
- des troisièmes moyens, dits de distribution secondaire amont, assurant le choix d'une unité de transit pour traitement d'un appel en attente dans cette unité, dès disponibilité d'un opérateur pour traitement, en fonction d'un coût maximum obtenu par comparaison des coûts établis, à partir d'indications caractéristiques de la situation présente de chacune des unités de transit alors prévues pour pouvoir être mises en communication avec le groupe de traitement dont fait partie cet opérateur disponible;
- des quatrièmes moyens, dits de distribution tertiaire, assurant un choix d'un opérateur disponible dans un groupe de traitement, pour la prise en compte d'un appel provenant d'une unité de transit, à partir d'indications caractéristiques de la situation présente du groupe de traitement avec lequel ladite unité de transit a été mise en communication.

Selon une autre caractéristique de l'invention, l'agencement comporte des premiers moyens assurant le choix d'une unité de transit pour un appel parvenu par un pilote, en fonction d'un coût minimum obtenu suite à la comparaison des coûts établis, pour chacune des unités de transit susceptibles d'être mises en liaison avec le pilote récepteur, à partir d'indications caractéristiques définies qui incluent un indice de remplissage de l'unité de transit en appels en attente, un délai standardisé d'attente estimé par appel pour cette unité et un niveau de priorité attribué à cette unité par rapport au pilote.

Selon une autre caractéristique de l'invention, l'agencement comporte des seconds moyens assurant le choix d'un groupe de traitement, pour un appel parvenu à une unité de transit préalablement vide d'appel, en fonction d'un coût minimum obtenu par comparaison des coûts établis, pour chacun des groupes de traitement alors prévus pour pouvoir être mis en communication avec l'unité de transit, à partir d'indications caractéristiques qui incluent un indice relatif à la disponibilité des opérateurs du groupe de traitement, un niveau de priorité attribué à cette unité de transit, une valeur de plus long temps de repos relative aux opérateurs du groupe de traitement, et une constante de coût liée à l'unité de transit.

Selon une autre caractéristique de l'invention, l'agencement comporte des troisièmes moyens assurant le choix d'une unité de transit pour traitement d'un appel en attente dans cette unité, dès disponibilité d'un opérateur pour le traitement d'un appel, en fonction d'un coût maximum obtenu par comparaison des coûts établis, pour chacune des unités de transit alors prévues pour pouvoir être mises en communication avec le groupe de traitement dont fait partie cet opérateur disponible, à partir d'indications caractéristiques qui incluent un indice de remplissage de l'unité de transit, un niveau de priorité attribué à cette unité transit, une valeur de durée d'attente réelle pour le premier appel à servir de cette unité et une constante de coût liée à cette unité.

Selon une autre caractéristique de l'invention, l'agencement comporte des moyens de pondérations ajustables qui sont associés aux indications caractéristiques de situation pour permettre de graduer les coûts pour les différents groupes de traitement et/ou unités de transit.

L'invention, ses caractéristiques et ses avantages sont précisés dans la description qui suit en liaison avec les figures évoquées ci-dessous.

La figure 1 présente un schéma de principe d'un agencement de distribution d'appels selon l'invention.

La figure 2 présente un schéma relatif à la structure de distribution mise en oeuvre.

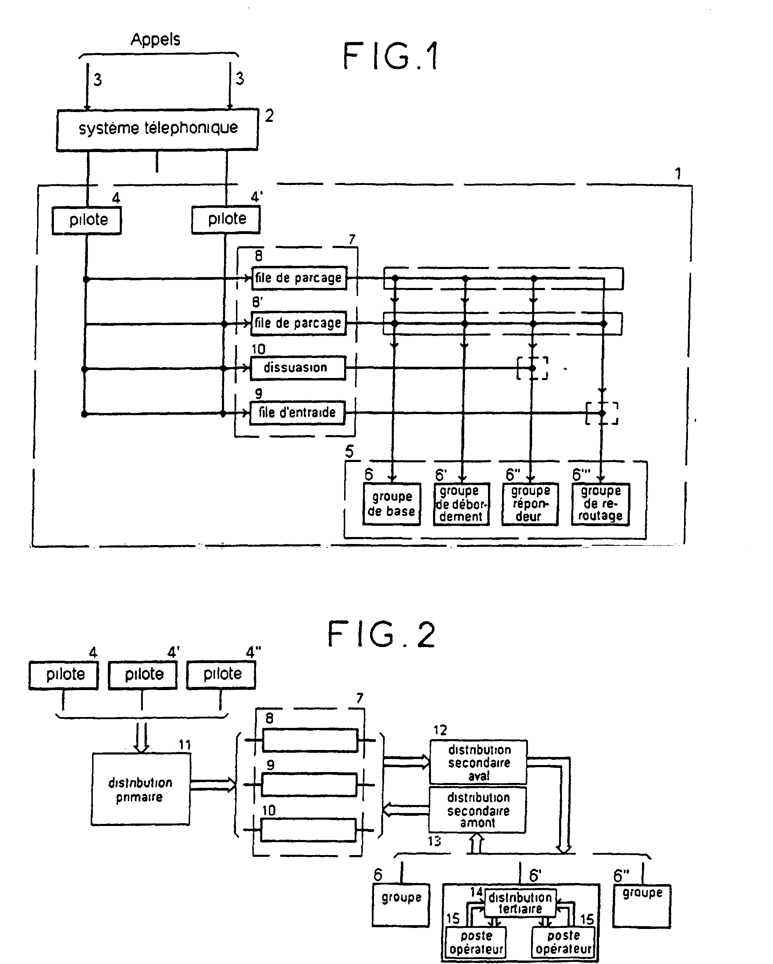

L'agencement de distribution d'appels 1 schématisé en figure 1 est supposé recevoir des appels téléphoniques établis par, ou éventuellement vers, des correspondants par l'intermédiaire de postes ou terminaux téléphoniques et/ou radiotéléphoniques d'un réseau de télécommunications 2. Ce réseau est par exemple organisé autour d'un commutateur téléphonique ou encore d'une pluralité de commutateurs téléphoniques interconnectés. Le réseau 2 comporte par exemple une pluralité de joncteurs 3 par l'intermédiaire desquels les appels sont transmis par exemple par mise en oeuvre d'un processus connu tels que ceux dits d'acheminement direct à l'arrivée ou de sélection directe à l'arrivée.

Les appels ici considérés sont ceux qui visent à accéder à un service déterminé que le correspondant appelant a sélectionné. Comme il est connu différents types de sélection des services par les correspondants peuvent être exploités. La sélection effectuée peut pratiquement se traduire au niveau d'un commutateur du réseau de télécommunications 2 par l'arrivée de l'appel selon la technique dite d'acheminement direct à l'arrivée, un joncteur particulier ou appartenant à un faisceau de joncteurs d'arrivée étant supposé attribué à un service déterminé. La sélection peut aussi être de type dit sélection directe à l'arrivée, les divers numéros susceptibles d'être appelés étant alors individuellement rattachés aux différents services qu'il est possible de demander. Cette sélection peut éventuellement être réalisée en fonction de caractéristiques propres au correspondant appelant, lorsque ce dernier est préalablement répertorié et que, par exemple, un appel d'un tel correspondant se traduit d'une manière qui permet une identification, par exemple si une indication caractéristique de ce correspondant, tel son numéro individuel d'abonné est transmis en phase d'appel. Cette sélection peut aussi être effectuée par un automate, par exemple un automate d'un serveur vocal, suite à une demande effectuée par un correspondant auprès de ce serveur préalablement appelé, cette demande étant effectuée sous forme vocale dans le cas du serveur ici envisagé à titre d'exemple.

Quelle que soit la forme de sélection envisagée, les appels parvenant à l'agencement de distribution d'appels 1 sont dirigés vers des pilotes d'accueil tels 4 et 4', qui sont affectés chacun à un service et qui assurent chacun la desserte des appels destinés à ce service. Les services ici considérés sont par exemple un service de réservation de places d'une entreprise de transport ou de véhicules d'une entreprise de location, un service téléphonique d'accès direct des clients à un certain nombre d'opérations d'une entreprise de télévente, d'un réseau bancaire ou de tout autre entreprise équipée à cet effet.

Les appels, destinés à un service et orientés vers le pilote d'accueil de ce service, via le réseau de télécommunications 2 selon un processus de sélection tel qu'évoqué plus haut, parviennent à ce pilote d'accueil selon leur ordre chronologique d'arrivée afin d'être pris en compte le plus rapidement possible et afin qu'une réponse la plus appropriée possible soit fournie à chacun d'eux.

Dans la mesure où les questions peuvent être très variées, il existe en conséquence diverses possibilités de réponse qui sont ici prévues fournies par l'intermédiaire d'un ensemble de traitement 5 susceptible de comporter au moins un groupe 6 et généralement plusieurs chargé(s) de fournir les réponses aux questions posées dans le cadre des appels en fonction des possibilités alors disponibles.

Dans l'exemple envisagé, le premier groupe de traitement 6 est supposé être un groupe dit de base comportant au moins un et plus généralement plusieurs opérateurs humains, chacun étant doté d'au moins un poste ou terminal téléphonique. Les appels entrants successivement reçus par le groupe sont répartis entre les opérateurs en fonction de la disponibilité de chacun d'entre eux afin que ces opérateurs entrent téléphoniquement en communication avec les demandeurs et prennent connaissance du ou des objets de chaque appel. Suite à une telle prise de connaissance l'opérateur se charge de fournir la réponse si cela lui est possible ou sinon d'engager un processus destiné à permettre la fourniture d'une réponse qui soit la plus appropriée possible.

Dans les agencements de distribution de grande capacité, il est prévu d'associer à ou au groupe(s) de base 6 un groupe 6' de même constitution, dit de débordement, ou même plusieurs.

Un groupe de débordement tel que 6' est éventuellement composé de la même manière que le précédent et les opérateurs humains qu'il comporte sont notamment prévus pour répondre à des appels susceptibles d'être traités par les opérateurs humains du groupe de base 6 lorsque ceux-ci n'ont plus la possibilité de répondre par eux-mêmes aux nouveaux appels entrants dans la mesure où ils sont déjà occupés à répondre à des appels arrivés antérieurement.

L'ensemble de traitement 5 d'un agencement de distribution d'appels 1 est encore susceptible de comporter par exemple:

- un groupe de messagerie vocale, non représenté en figure 1, comportant au moins un opérateur de type machine, apte à enregistrer des questions formulées vocalement par voie téléphonique par un demandeur dans le cadre d'un appel;
- un groupe répondeur vocal, tel 6'', comportant aussi au moins un opérateur de type machine, apte à fournir des réponses, soit standardisées, soit éventuellement personnalisées, organisées d'une manière prévue à l'avance à des questions qui sont posées par des correspondants dans le cadre d'appels et qui sont formulées d'une manière déterminée;
- un groupe de re-routage, tel 6''', comportant au moins un opérateur humain et/ou une machine, pour réorienter les appels qui nécessitent chacun d'être pris en compte par un autre groupe que celui auquel soit l'appel considéré est parvenu, soit auquel cet appel aurait du parvenir dans d'autres conditions que celles où il est avant réorientation.

Les appels parvenant à l'agencement de distribution d'appels 1 par l'intermédiaire des pilotes transitent par un ensemble intermédiaire 7 permettant, si besoin est, un parcage de ces appels avant qu'ils ne soient pris en compte pour traitement par l'un ou l'autre des groupes de l'ensemble de traitement 5.

L'ensemble intermédiaire 7 comporte au moins une unité de transit de type file d'attente et ici dite de parcage, telles les unités 8 et 8', permettant de conserver, temporairement et si besoin est, les appels attendant d'être traités tant que ne sont pas commencés les traitements respectifs de ces appels par des opérateurs de l'ensemble de traitement 5.

L'ordre de transmission, vers l'ensemble de traitement 5, des appels parqués dans une unité de parcage peut être de type premier entré-premier sorti de manière à respecter l'ordre d'arrivée de ces appels. D'autres ordres de traitement sont susceptibles d'être mis en oeuvre pour favoriser certains correspondants appelants ou certaines opérations par rapport à d'autres, selon des règles mis en oeuvre par ou avec l'accord de l'exploitant de l'agencement de distribution d'appels.

L'ensemble intermédiaire 7 est aussi susceptible de comporter au moins une autre unité de transit de type file d'attente ici dite d'entraide, telle l'unité 9, permettant de conserver, temporairement et si besoin est, des appels qui doivent être re-routés pour une raison ou pour une autre, par exemple un appel dont le traitement est renvoyé par un opérateur d'un groupe de l'ensemble de traitement vers un autre groupe en vue d'un traitement spécifique, par exemple complémentaire que ne peut effectuer l'opérateur initiateur du renvoi.

L'ensemble intermédiaire comporte éventuellement aussi une unité de transit intermédiaire de type pseudo-file d'attente, telle l'unité 10, pour des appels n'ayant pas en fait à subir d'attente en raison du traitement qui va leur être appliqué. Une telle pseudo-file d'attente est par exemple utilisée pour les appels destinés à être re-routés, dans l'exemple présenté l'unité 10 est supposée utilisée pour les appels dont on veut décourager la poursuite. Ces appels sont usuellement aiguillés vers un répondeur du groupe 6'' chargé de communiquer un message de dissuasion sous forme vocale aux demandeurs, par exemple pour leur demander de ne pas rappeler avant un laps de temps donné en cas de surcharge de l'ensemble de traitement 5.

L'agencement de distribution d'appels, schématisé sur la figure 1, est supposé figé d'une manière déterminée qui est susceptible d'être modifiée, sous le contrôle de l'exploitant de l'agencement, en fonction de l'évolution des besoins des correspondants et des moyens disponibles. Dans la configuration présentée il est prévu que chaque pilote, tel 4 ou 4' correspondant à un service puisse accéder à plusieurs directions de distribution d'appels à chacune desquelles correspond un groupe d'accueil. Chaque groupe d'accueil associe un ou plusieurs groupes de l'ensemble de traitement 5 à une unité de transit, de type file ou pseudo-file d'attente, de l'ensemble intermédiaire 7 et il a une ou des fonctions déterminées de traitement.

Dans l'exemple présenté, un premier groupe d'accueil comporte l'unité de parcage 8 et les groupes 6, 6' et 6'' de l'ensemble de traitement 5 et traite les appels en provenance du pilote 6 qui correspondent normalement à des demandes relatives à un service déterminé ayant par exemple un numéro téléphonique individuel d'appel. Un second groupe d'accueil comporte l'unité de parcage 8' et l'ensemble des groupes 6 à 6''' de l'ensemble de traitement 5 et il traite les appels en provenance du pilote 6' qui correspondent à des demandes relatives à un autre service déterminé. Deux autres groupes d'accueil comportent respectivement l'unité d'entraide 9 et le groupe de re-routage 6''' pour l'un ainsi que l'unité de dissuasion 10 et le groupe répondeur 6'' pour l'autre, l'un et l'autre étant agencés pour recevoir des appels de l'un ou de l'autre des deux pilotes 4 et 4' lorsque ces appels doivent soit subir un re-routage soit recevoir un message de dissuasion par exemple avant un rejet ou une attente susceptible de se prolonger.

Le re-routage est susceptible d'être local et il est par exemple réalisé à l'intérieur d'un commutateur téléphonique constituant alors l'essentiel du réseau de télécommunications 2, il peut aussi impliquer des commutateurs téléphoniques distants auquel les appels sont alors susceptibles d'être transmis par l'intermédiaire de joncteurs 3 du réseau de télécommunications 2.

Comme indiqué plus haut, l'agencement de distribution d'appels 1 selon l'invention est conçu pour permettre des adaptations et des reconfigurations tant des éléments qui le constituent que de la distribution des appels et ce, même en cours d'exploitation.

A cet effet, la distribution de ces appels s'effectue à trois niveaux comme symbolisé sur la figure 2.

Selon les niveaux sont pris en compte des notions d'occupation des ressources dont dispose l'agencement de distribution d'appels 1, d'attente prévisible pour un appel, de plus long temps de repos pour un opérateur, de priorité et plus particulièrement de coût et de durée d'attente réelle par appel.

Il est notamment prévu qu'un appel, pour lequel il n'est pas possible de trouver un opérateur disponible dans un groupe de traitement auquel il doit être adressé, soit transmis à une unité de parcage ou routé vers un groupe de débordement, éventuellement après écoulement d'une temporisation déterminée, ou encore re-routé au travers du réseau de télécommunications 2, vers un groupe de traitement distant, par exemple associé à un commutateur téléphonique autre que celui où il a initialement abouti. De telles opérations impliquent bien entendu que l'état du groupe vers lequel un appel est renvoyé soit pris en considération avant que ne soit initié le routage ou le re-routage. Dans la mesure ou ces opérations de routage et de re-routage tendent à retarder la fourniture d'une réponse à la demande destinée à être formulée pour un appel ainsi traité, il est prévu d'attribuer une priorité aux appels ainsi routés ou re-routés au moins au niveau du groupe de traitement chargé de l'opération correspondante.

Il est aussi prévu qu'un appel mis dans une unité de parcage, telle 8, soit traité par le ou les groupes de traitement, tels les groupes 6, 6', 6'' pour l'unité de parcage 8, associés à cette unité dans un groupe d'accueil. Un appel introduit dans une unité de parcage peut donc éventuellement être routé en débordement du groupe de base associé à cette unité, tel le groupe 6 pour l'unité de parcage 8, vers un autre groupe de traitement du même groupe d'accueil, en fonction des états respectifs et présents des groupes de traitement susceptibles d'intervenir pour cet appel. Il est ainsi prévu de prendre en compte les plus long temps de repos pour les groupes de traitement comportant des opérateurs humains, ainsi que les priorités fixées, ces dernières étant gérées par au moins un superviseur prévu parmi le personnel exploitant. Plusieurs niveaux d'attente sont susceptibles d'être gérés pour un appel en attente dans une unité de parcage, ces niveaux sont prévus pour être gérés en fonction des pilotes par l'intermédiaire desquels les appels parqués sont arrivés et il est prévu de tenir compte des temps d'attente réels pour chacun. Ainsi, si un opérateur humain devient disponible dans un groupe de traitement, le choix de l'appel qu'il va alors traiter parmi les appels parqués dans une unité de transit dépend notamment des temps réels d'attente de ces divers appels.

Tout appel téléphonique reçu par l'intermédiaire d'un pilote d'accueil, tel 4, subit une première phase de distribution qui est destinée à assurer son orientation vers une unité de transit de l'ensemble intermédiaire 7 et le plus souvent vers une unité de transit; telle que l'une des unité de parcage 8 et 8'. Cette première phase est assurée par une distribution, dite primaire, symbolisée sous la référence 11 sur la figure 2.

Cette distribution primaire 11 est donc mise en oeuvre pour chaque appel parvenant par l'un des pilotes de l'agencement de distribution d'appels 1, elle assure le choix du groupe d'accueil et par conséquent de l'unité de transit, telle l'une des unités 8, 9 ou 10, vers laquelle chaque appel est orienté, ce qui correspond à la définition d'une direction primaire pour chaque appel reçu. Un algorithme est mis en oeuvre à cet effet et le choix qu'il effectue pour un appel prend en compte les états connus des directions possibles et des unités de transit qui sont susceptibles d'être concernées au moment où l'algorithme est mis en oeuvre.

Ceci s'effectue par prise en compte de l'état autorisé ou non de chaque direction possible que traduit un paramètre de configuration, de l'état bloqué ou non de chaque direction possible que traduit un paramètre de blocage ajustable par le superviseur déjà évoqué plus haut et de la priorité affectée à chaque direction que traduit un paramètre de priorité lui aussi ajustable par le superviseur.

Sont également pris en compte, les états de remplissage respectifs des unités de transit vers lesquelles l'appel considéré est susceptible d'être orienté et les durées d'attente estimées pour chacune de ces unités.

A partir de ces éléments l'algorithme détermine une fonction de coût F(Di) telle que définie ci-dessous ou

$$F(Di)= IRFA+k1*Pi+k2*APN+Ci$$

- . k1 et k2 sont des coefficients associés au pilote d'où parvient l'appel considéré;
- . IRFA est un nombre entier, par exemple compris entre 0 et 10, définissant l'indice de remplissage de l'unité de transit considérée;
- . Pi est un nombre entier, par exemple compris entre 0 et 10 donnant le niveau de la priorité affectée à la direction considérée, cette priorité étant ici considérée comme plus élevée pour les valeurs numériques faibles;
- . APN est ici une valeur fractionnaire comprise entre 0 et 1 qui correspond à un délai standardisé d'attente prévisible pour un appel routé dans la direction considérée, cette valeur APN équivaut à une fraction d'une valeur d'attente maximum AM déterminée qui est ajustable par le superviseur;
- . Ci est une constante de coût associée à la direction considérée pour le pilote emprunté par l'appel.

Le choix de la direction à emprunter et donc de l'unité de transit d'ensemble intermédiaire choisie pour un appel donné est effectué en sélectionnant la direction ayant la plus faible fonction de coût parmi les directions possibles.

A titre d'exemple, dans le cas d'un pilote susceptible d'avoir accès à trois directions D1, D2 et D3 et par conséquent à trois unités de parmi "n" possibles, ces unités étant par exemple deux unités de parcage 8 et une unité de dissuasion 10, si les priorités respectivement accordées à ces unités se traduisent par les chiffres 1, 2 et 3, il est possible de définir un modèle de distribution avec les coûts tels que définis dans le tableau suivant:

| Direction | Priorité | Coût |
| --- | --- | --- |
| D1 | 1 | 0 |
| D2 | 2 | 0 |
| D3 | 3 | 5 |
| autres directions | n | 100 |

Un poids important est ici supposé affecté à la constante de coût pour les directions non prévues pour le pilote considéré dans les conditions présentement en vigueur.

Il est possible au superviseur d'attribuer une priorité entre deux directions pour les différencier l'une de l'autre lorsque l'état de remplissage des unités de parcage, telles 8 et 8' en figure 1, est identique.

Ceci est réalisé par exemple en rendant prioritaire celle dont l'utilisation est susceptible d'être la plus avantageuse, ceci étant réalisé ici par une attribution de la valeur 0,1 au coefficient k1 et la valeur 0 au coefficient k2 des deux directions D1 et D2 considérées, ce qui donne les résultats suivants en fonction de l'état de remplissage des deux unités de parcage 8 et 8' considérées:

EP 0 835 016 B1

| | 8 vide | vide<8<pleine | 8 pleine |
|---|---|---|---|
| 8' vide | utilisation D1 | utilisation D2 | utilisation D2 |
| vide<8'<pleine | utilisation D1 | utilisation D1 | utilisation D2 |
| 8' pleine | utilisation D1 | utilisation D1 | utilisation D3 |

Il est aussi possible au superviseur d'attribuer une priorité à une direction pour laquelle le temps d'attente, estimé pour un appel en fonction du remplissage en appels en attente de l'unité de parcage associée à cette direction, est plus limité que pour une autre direction.

Ceci est par exemple réalisé par une attribution de la valeur 0.01 pour le facteur k 1 et la valeur 1 pour le facteur k2, ce qui donne les résultats suivants où une priorité est donnée en fonction de l'état de remplissage des deux unités de parcage 8 et 8' considérées:

| | 8 vide | vide<8<pleine | 8 pleine |
|---|---|---|---|
| 8' vide | utilisation D1 ou D2 | utilisation D2 | utilisation D2 |
| vide<8'<pleine | utilisation D1 | utilisation D1 ou D2 | utilisation D2 |
| 8' pleine | utilisation D1 | utilisation D1 | utilisation D3 |

Le superviseur dispose préférablement de plusieurs modèles de distribution primaire qui ont par exemple été élaborées par simulation et validés par mise en exploitation et qu'il a la possibilité d'ajuster ou éventuellement de substituer l'un à l'autre en fonction des conditions d'exploitation, s'il juge que cela devient nécessaire.

Une seconde phase de distribution est destinée à assurer l'orientation de chacun des appels parvenus à l'une ou l'autre des unités de transit de l'ensemble intermédiaire 7 et notamment des unités de parcage, vers le groupe de traitement susceptible de fournir une réponse à ce que demande le correspondant à l'origine de cet appel. Cette seconde phase est assurée par une distribution, dite secondaire, qui met en oeuvre deux processus de distribution distincts l'un dit aval et l'autre dit amont, les distributions correspondantes étant symbolisées sous les références 12 et 13 sur la figure 2. La distribution secondaire aval référencée 12 est destinée à être exploitée lorsqu'un appel parvient à une unité de transit, par exemple une unité de parcage 8, où il n'y a alors pas d'autre appel en attente, ce qui rend nécessaire un transfert immédiat de l'appel arrivant vers un des groupes de traitement, tel par exemple le groupe 6, qui fait partie du groupe d'accueil comportant l'unité de transit concernée et qui est susceptible de prendre cet appel.

La distribution secondaire amont référencée 13 est destinée à être exploitée pour affecter un appel à un groupe de traitement, lorsqu'un opérateur, homme ou machine suivant le cas, devient disponible dans un groupe déterminé de l'ensemble de traitement 5 afin de déterminer s'il y a ou non au moins un appel en attente dans une unité de transit qui est incluse dans un groupe d'accueil dont fait aussi partie le groupe déterminé où se trouve l'opérateur devenu disponible.

Les deux distributions secondaires 12 et 13 sont préférablement fondées sur le même mécanisme d'optimisation indépendamment du pilote, du groupe d'accueil et du groupe de traitement considéré.

Comme indiqué plus haut, la distribution secondaire aval 12 est mise en oeuvre à chaque fois qu'un appel est transmis par un pilote à une unité de transit, telle que notamment une unité de parcage 8, une unité d'entraide 9 ou une unité de dissuasion 10, lorsque cette unité est autrement vide d'appel en attente. Elle est destinée à déterminer la direction secondaire correspondant au groupe de traitement vers lequel l'appel considéré est à acheminer.

L'algorithme de distribution mis en oeuvre détermine une fonction de coût F(Di) par direction secondaire aval qui est analogue à celle prévue pour la distribution primaire et qui est ici définie par la formule:

$$F(Di)= IDR+k'1*Pi+k'2*PLTR+Ci$$

.   IDR correspond à un indice de disponibilité des ressources du groupe de traitement accessible par l'intermédiaire de la direction considérée, soit ici la disponibilité des opérateurs, hommes et/ou machines suivant les cas, appartenant à ce groupe;

.   k'1 et k'2 sont des coefficients de caractérisation de l'algorithme associés à l'unité de transit considérée, k'2 étant ici une valeur négative;

.   Pi est la valeur de priorité de la direction considérée qui est attribuée pour le groupe de traitement concerné et qui est ajustable par le superviseur;

7

. PLTR est la valeur du plus long temps de repos alors constaté pour les opérateurs du groupe de traitement concerné;

. Ci est une constante de coût associée à la direction considérée qui est elle aussi ajustable par le superviseur.

La direction secondaire aval choisie pour l'orientation d'un appel à l'aide de cet algorithme est celle présentant le plus faible coût comme dans le cas du choix au niveau de la distribution primaire 11.

La distribution secondaire amont 13 est mise en oeuvre à chaque fois qu'un opérateur devient disponible dans un groupe déterminé de l'ensemble de traitement 7 et qu'il est donc susceptible de traiter un appel lui-même pris en compte par un groupe d'accueil dont fait partie le groupe de traitement auquel appartient alors l'opérateur considéré.

Cette distribution secondaire amont est destinée à choisir le groupe d'accueil, c'est à dire en fait l'unité de transit qui devient prioritaire pour faire traiter, par le groupe de traitement où un opérateur est devenu disponible, un ou un des appels que cette unité a pris en compte. Elle détermine donc dans ce cas une direction secondaire amont correspondant à l'unité de transit choisie par une détermination de plus fort coût.

L'algorithme de distribution mis en oeuvre détermine une fonction de coût F(Di) par direction secondaire amont qui est ici définie par la formule:

$$F(Di)=IRFA+k''1*Pi+k''2*AR+Ci$$

. IRFA est l'indice de remplissage de l'unité de transit considérée;

. Pi est la priorité attribuée à la direction secondaire amont considérée;

. $k''1$ et $k'''2$ sont des coefficients de caractérisation de l'algorithme associés au groupe de traitement considéré;

. $k''1$ est ici une valeur négative pour tenir compte du fait que les priorités les plus basses correspondent à des valeurs de Pi élevées;

. AR est la durée d'attente réelle déterminée pour le premier appel à servir de l'unité de transit considérée;

. Ci est la constante de coût déjà évoquée plus haut.

La direction secondaire amont choisie à l'aide de cet algorithme est celle présentant le plus fort coût pour traiter le plus rapidement possible les appels provenant des unités de transit prioritaires aux moments où apparaissent des disponibilités d'opérateurs au niveau de l'ensemble de traitement 5.

Les distributions secondaires aval et amont permettent notamment de définir et gérer un seuil d'attente réel par direction avant sélection. Ceci revient à imposer un temps minimum d'attente pour un appel parvenu à une unité de transit en vue de son éventuel traitement par un groupe de traitement donné. Ceci permet notamment d'ajuster les temporisations de déclenchement de débordement et de re-routage. Ceci permet aussi de prendre en compte de façon pondérée l'état des groupes de l'ensemble de traitement 5 et la priorité de ces groupes vis-à-vis de chaque groupe d'accueil, le plus long de temps repos d'opérateur, le test préalable de l'état d'un groupe de débordement avant acheminement d'un appel à ce groupe, la gestion d'un seuil d'attente minimum par groupe de traitement pour un appel parqué dans une unité de transit et le traitement prioritaire d'un appel re-routé.

Une troisième phase de distribution assure l'orientation de chacun des appels transmis à un groupe de l'ensemble de traitement 5 vers les opérateurs que comportent ce groupe lorsque ces opérateurs sont disponibles et que parviennent des appels à traiter par le groupe auquel ils appartiennent.

Cette troisième phase est assurée par une distribution, dite tertiaire et référencée 14 sur la figure 2, qui met en oeuvre un processus de distribution spécifique pour permettre à chaque appel pris en compte par un groupe de traitement, tel le groupe 6', d'atteindre celui des opérateurs qui va au moins partiellement le traiter.

Chaque opérateur, homme ou machine, disposant d'un appareil téléphonique 15, tel qu'un poste ou terminal dans le cas d'un opérateur humain, ou au moins un circuit dans le cas d'une machine lui permettant de traiter téléphoniquement l'appel qui lui est transmis de manière à y répondre d'une manière déterminée, comme connu par ailleurs.

La distribution tertiaire 14 est ici supposée scindée en éléments associés à chacun des groupes de l'ensemble de traitement 5 elle est susceptible de fonctionner selon différents modes connus préférablement configurables selon les besoins pour chaque groupe par le superviseur. Elle s'effectue par exemple par une recherche à partir d'un entête ou de manière cyclique ou encore en prenant en compte le plus long temps de repos existant dans un groupe de traitement pour un opérateur de ce groupe. Elle se traduit par la présentation de l'appel à l'opérateur avec préférablement des informations relatives à cet appel qui ont été collectées par l'intermédiaire d'au moins certains des éléments de l'agencement de distribution d'appels 1 et/ou du réseau de télécommunications 2.

**Revendications**

1. Agencement de distribution d'appels téléphoniques destiné à permettre l'accès des utilisateurs de postes et/ou terminaux d'un réseau de télécommunications (2) à au moins un service assuré par l'intermédiaire d'au moins un opérateur (15), ledit agencement comportant au moins un pilote (4) recevant les appels téléphoniques d'accès à un service, au moins un groupe d'opérateurs de traitement (6, 6', 6" ou 6''') et au moins une unité de transit (8, 8' 9 ou 10) pour les appels reçus via un pilote et en attente de traitement par un opérateur, l'agencement comportant:

   - des premiers moyens (11), dits de distribution primaire, assurant le choix d'une unité de transit pour un appel parvenu par un pilote en fonction d'un coût minimum obtenu par comparaison des coûts établis à partir d'indications caractéristiques de la situation présente de chacune des unités de transit alors prévues pour pouvoir être mises en communication avec ce pilote;
   - des seconds moyens (12), dits de distribution secondaire aval, assurant le choix d'un groupe d'opérateurs de traitement, pour un appel parvenu à une unité de transit préalablement vide d'appel, en fonction d'un coût minimum obtenu par comparaison des coûts établis à partir d'indications caractéristiques de la situation présente de chacun des groupes d'opérateurs de traitement alors prévus pour pouvoir être mis en communication avec cette unité de transit;
   - des troisièmes moyens (13), dits de distribution secondaire amont, assurant le choix d'une unité de transit pour traitement d'un appel en attente dans cette unité, dès disponibilité d'un opérateur pour traitement, en fonction d'un coût maximum obtenu par comparaison des coûts établis, à partir d'indications caractéristiques de la situation présente de chacune des unités de transit alors prévues pour pouvoir être mises en communication avec le groupe d'opérateurs de traitement dont fait partie cet opérateur disponible;
   - des quatrièmes moyens (14), dits de distribution tertiaire, assurant un choix d'un opérateur disponible dans un group d'opérateurs de traitement, pour la prise en compte d'un appel provenant d'une unité de transit, à partir d'indications caractéristiques de la situation présente du groupe d'opérateurs de traitement avec lequel ladite unité de transit a été mise en communication.

2. Agencement, selon la revendication 1, **caractérisé en ce qu'**il comporte des premiers moyens (11) assurant le choix d'une unité de transit pour un appel parvenu par un pilote, en fonction d'un coût minimum obtenu suite à la comparaison des coûts établis, pour chacune des unités de transit susceptibles d'être mises en liaison avec le pilote récepteur, à partir d'indications caractéristiques définies qui incluent un indice de remplissage de l'unité de transit en appels en attente, un délai standardisé d'attente estimé par appel pour cette unité et un niveau de priorité attribué à cette unité.

3. Agencement, selon l'une des revendications 1 et 2, **caractérisé en ce qu'**il comporte des seconds moyens (12) assurant le choix d'un groupe d'opérateurs de traitement, pour un appel parvenu à une unité de transit préalablement vide d'appel, en fonction d'un coût minimum obtenu par comparaison des coûts établis, pour chacun des groupes d'opérateurs de traitement alors prévus pour pouvoir être mis en communication avec l'unité de transit, à partir d'indications caractéristiques qui incluent un indice relatif à la disponibilité des opérateurs du groupe d'opérateurs de traitement, un niveau de priorité attribué à cette unité de transit, une valeur de plus long temps de repos relative aux opérateurs du groupe d'opérateurs de traitement, et une constante de coût liée à l'unité de transit.

4. Agencement, selon l'une des revendications 1, 2 ou 3, **caractérisé en ce qu'**il comporte des troisièmes moyens (13) assurant le choix d'une unité de transit pour traitement d'un appel en attente dans cette unité, dès disponibilité d'un opérateur pour le traitement d'un appel, en fonction d'un coût maximum obtenu par comparaison des coûts établis, pour chacune des unités de transit alors prévues pour pouvoir être mises en communication avec le groupe d'opérateurs de traitement dont fait partie cet opérateur disponible, à partir d'indications caractéristiques qui incluent un indice de remplissage de l'unité de transit, un niveau de priorité attribué à cette unité transit, une valeur de durée d'attente réelle pour le premier appel à servir de cette unité et une constante de coût liée à cette unité.

5. Agencement, selon l'une des revendications 1, 2, 3 ou 4, **caractérisé en ce qu'**il comporte des moyens de pondérations ajustables qui sont associés aux indications caractéristiques de situation et particulièrement aux directions de distribution pour permettre de graduer les coûts pour les différents groupes d'opérateurs de traitement et/ ou unités de transit.

**Patentansprüche**

1. Telefonanruf-Verteilungsvorrichtung, die Benutzern von Apparaten und/oder Endgeräten eines Telekommunikationsnetzes (2) den Zugriff auf mindestens einen Dienst ermöglicht, der durch mindestens einen Operator (15) gewährleistet wird, wobei besagte Verteilung mindestens einen Treiber (4), der die für den Zugriff auf einen Dienst bestimmten Telefonanrufe entgegennimmt, mindestens eine Gruppe von Verarbeitungsoperatoren (6, 6', 6'' oder 6''') und mindestens eine Durchgangseinheit (8, 8', 9 oder 10) für die Anrufe beinhaltet, die über einen Treiber eingehen und auf Abwicklung durch einen Operator warten, wobei die Verteilung beinhaltet:

   - Erste Vorrichtungen (11), die als primäre Verteilungsvorrichtungen bezeichnet werden und die Auswahl einer Durchgangseinheit für einen über einen Treiber ankommenden Anruf in Abhängigkeit von einem minimalen Kostenwert gewährleisten, der durch Vergleich der Kosten ermittelt wird, die anhand von charakteristischen Anzeigen für die gegenwärtige Situation der einzelnen Durchgangseinheiten festgesetzt sind, die dafür vorgesehen sind, mit diesem Treiber verbunden werden zu können;
   - zweite Vorrichtungen (12), die als sekundäre nachfolgende Verteilungsvorrichtungen bezeichnet werden und die Auswahl einer Gruppe von Verarbeitungsoperatoren für einen bei einer zuvor freien Durchgangseinheit ankommenden Anruf in Abhängigkeit von einem minimalen Kostenwert gewährleisten, der durch Vergleich der Kosten ermittelt wird, die anhand von charakteristischen Anzeigen für die gegenwärtige Situation der einzelnen Gruppen von Verarbeitungsoperatoren festgesetzt sind, die dafür vorgesehen sind, mit dieser Durchgangseinheit verbunden werden zu können;
   - dritte Vorrichtungen (13), die als sekundäre vorhergehende Verteilungsvorrichtungen bezeichnet werden und die Auswahl einer Durchgangseinheit für die Abwicklung eines in dieser Einheit wartenden Anrufes von der Verfügbarkeit eines Verarbeitungsoperators an in Abhängigkeit von einem minimalen Kostenwert gewährleisten, der durch Vergleich der festgesetzten Kosten anhand von charakteristischen Anzeigen für die gegenwärtige Situation der einzelnen Durchgangseinheiten ermittelt wird, die dafür vorgesehen sind, mit der Gruppe von Verarbeitungsoperatoren verbunden werden zu können, welcher dieser verfügbare Operator angehört;
   - vierte Vorrichtungen (14), die als tertiäre Verteilungsvorrichtungen bezeichnet werden und die Auswahl eines für die Abwicklung eines von einer Durchgangseinheit kommenden Anrufs verfügbaren Operators in einer Gruppe von Verarbeitungsoperatoren anhand von charakteristischen Anzeigen für die gegenwärtige Situation der Gruppe von Verarbeitungsoperatoren gewährleisten, mit welcher besagte Durchgangseinheit verbunden wurde.

2. Verteilung gemäß Anspruch 1, **dadurch gekennzeichnet, daß** diese erste Vorrichtungen (11) beinhaltet, welche die Auswahl einer Durchgangseinheit für einen von einem Treiber kommenden Anruf in Abhängigkeit von einem minimalen Kostenwert gewährleisten, der nach dem Vergleich der festgesetzten Kosten für jede einzelne der Durchgangseinheiten, mit welcher der Empfangstreiber verbunden werden kann, anhand von festgelegten charakteristischen Anzeigen ermittelt wurde, darunter ein Auslastungsindex der Durchgangseinheit mit wartenden Anrufen, eine für diese Einheit pro Anruf geschätzte standardisierte Wartedauer und eine dieser Einheit zugewiesene Prioritätsstufe.

3. Verteilung gemäß einem oder beiden Ansprüchen 1 und 2, **dadurch gekennzeichnet, daß** diese zweite Vorrichtungen (12) beinhaltet, welche die Auswahl einer Gruppe von Verarbeitungsoperatoren für einen bei einer zuvor freien Durchgangseinheit ankommenden Anruf in Abhängigkeit von einem minimalen Kostenwert gewährleisten, der durch Vergleich der festgesetzten Kosten für die einzelnen Gruppen von Verarbeitungsoperatoren, die mit der Durchgangseinheit verbunden werden können, anhand von charakteristischen Anzeigen ermittelt wurde, darunter ein Index für die Verfügbarkeit der Gruppe von Verarbeitungsoperatoren, eine dieser Durchgangseinheit zugewiesene Prioritätsstufe, ein Wert für die längste relative Inaktivitätszeit der Operatoren der Verarbeitungsoperatorgruppe und eine mit dieser Durchgangseinheit verknüpfte Kostenkonstante.

4. Verteilung gemäß einem oder mehreren der Ansprüche 1, 2 oder 3, **dadurch gekennzeichnet, daß** diese dritte Vorrichtungen (13) beinhaltet, welche die Auswahl einer Durchgangseinheit für die Abwicklung eines in dieser Einheit anstehenden Anrufs von der Verfügbarkeit eines Operators für die Abwicklung eines Anrufs an in Abhängigkeit von einem minimalen Kostenwert gewährleisten, der durch Vergleich der festgesetzten Kosten für die einzelnen Durchgangseinheiten, die mit der Gruppe von Verarbeitungsoperatoren verbunden werden können, welcher dieser verfügbare Operator angehört, anhand von charakteristischen Anzeigen ermittelt wurde, darunter ein Auslastungsindex der Durchgangseinheit, eine dieser Durchgangseinheit zugewiesene Prioritätsstufe, ein Wert für die reale Wartedauer für den ersten von dieser Einheit anzunehmenden Anruf und eine mit dieser Einheit verknüpfte Kostenkonstante.

**5.** Verteilung gemäß einem oder mehreren der Ansprüche 1, 2, 3 oder 4, **dadurch gekennzeichnet, daß** diese einstellbare Gewichtungsvorrichtungen beinhaltet, die den charakteristischen Anzeigen für die Situation und insbesondere den Verteilungsrichtungen zugeordnet sind, um so die Kosten für die verschiedenen Gruppen von Verarbeitungsoperatoren und/oder Durchgangseinheiten abstufen zu können.

**Claims**

**1.** A telephone call distribution facility for giving the users of sets and/or terminals in a telecommunications network (2) access to at least one service provided by means of at least one agent (15), said facility including at least one call-director (4) receiving telephone calls for accessing a service, at least one group of processing agents (6, 6', 6", or 6'''), and at least one transit unit (8, 8', 9, or 10) for calls received via a call-director and waiting for processing by an agent, the facility comprising:

- "primary distribution" first means (11) for selecting a transit unit for a call reaching a call-director, the selection being made as a function of a minimum cost obtained by comparing costs established on the basis of indications characteristic of the present situations of each of the transit units capable at that time of being put into communication with said call-director;
- "downstream secondary distribution" second means (12) for selecting a group of processing agents for a call that has reached a transit unit that was previously empty of calls; the selection being as a function of a minimum cost obtained by comparing costs established on the basis of indications characteristic of the present situations of each of the groups of processing agents capable at that time of being put into communication with said transit unit;
- "upstream secondary distribution" third means (13) for selecting a transit unit for processing a call waiting in said unit as soon as an agent becomes available for processing, selection being as a function of a maximum cost obtained by comparing costs established on the basis of indications characteristic of the situations present in each of the transit units capable at that time of being put into communication with the group of processing agents of which the available agent forms a part; and
- "tertiary distribution" fourth means (14) for selecting an available agent in a processing of processing agents to take account of a call coming from a transit unit, on the basis of indications characteristic of the situation present in the group of processing agents with which said transit unit has been put into communication.

**2.** A facility according to claim 1, **characterized in that** it includes first means (11) for selecting a transit unit for a call that has reached a call-director, as a function of a minimum cost obtained after comparing costs that are established for each of the transit units that could be put into communication with the receiving call-director on the basis of defined characteristic indications which include an index for the occupancy of the transit unit in waiting calls, a standardized waiting time period estimated for each call in said unit, and a priority level given to said unit.

**3.** A facility according to claim 1 or 2, **characterized in that** it includes second means (12) for selecting a group of processing agents for a call that has reached a transit unit that was previously empty of calls, as a function of a minimum cost obtained by comparing costs established for each of the groups of processing agents capable at that time of being put into communication with the transit unit, on the basis of characteristic indications including an index relating to the availability of agents in the group of processing agents, a priority level given to said transit unit, a value for the longest rest time relating to the agents of the group of processing agents, and a cost constant associated with the transit unit.

**4.** A facility according to any one of claims 1, 2, or 3, **characterized in that** it includes third means (13) for selecting a transit unit for processing a call waiting in said unit as soon as an agent becomes available to process a call, selection being as a function of a maximum cost obtained by comparing costs established for each of the transit units capable at that time of being put into communication with the group of processing agents of which the available agent forms a part, on the basis of characteristic indications which include an index for the occupancy of the transit unit, a priority level allocated to said transit unit, a real waiting duration value for the first call to be served in said unit, and a cost constant associated with said unit.

**5.** A facility, according to any one of claims 1, 2, 3, or 4, **characterized in that** it includes weighting means that are adjustable and that are associated with the situation characteristic indications, and particularly with the distribution directions to enable costs to be graded for different groups of processing agents and/or transit units.

# FIG.1

Appels

3    3

système téléphonique    2

1

pilote    4    pilote    4'

7

8    file de parcage
8'    file de parcage
10    dissuasion
9    file d'entraide

5

6    groupe de base    6'    groupe de débordement    6"    groupe répondeur    6'''    groupe de re-routage

# FIG.2

pilote    4    pilote    4'    pilote    4"

7

8

distribution primaire    11

9

10

12    distribution secondaire aval

distribution secondaire amont

13

6    groupe    6'    14    distribution tertiaire    6"    groupe

15    poste opérateur    15    poste opérateur